# EUROPEAN PATENT APPLICATION

(11) **EP 1 703 029 A1**
(43) Date of publication of application: **20.09.2006**
(21) Application number: 04805116.3
(22) Date of filing: 22.12.2004
(51) Int. Cl.: E03D 1/14

(54) **QUANTIFIED WATER-SAVING DEVICE FOR DUAL-FLUSH TOILETS**

(30) Priority: 22.12.2003 ES 200303025
(71) Applicant: Blanco Gutierrez, José, 28006 Madrid (ES); Sanz Luz, Juan, 28006 Madrid (ES)
(72) Inventor: Blanco Gutierrez, José, 28006 Madrid (ES); Sanz Luz, Juan, 28006 Madrid (ES)
(74) Representative: Urizar Anasagasti, Jesus Maria
(86) International application number: PCT/ES2004/000573
(87) International publication number: WO 2005/061807

(57) **Abstract**

The invention relates to a quantified water-saving device for dual-flush toilets. The inventive device comprises a single button (11) which, when actuated, moves an overflow pipe (3) upwards, the lower end of said pipe being equipped with a discharge valve disc (4). According to the invention, the aforementioned overflow pipe (3) comprises: a float (5) which can maintain the device open until all of the liquid has been emptied, if no other forces are acting on the pipe other than the weight of same; and an intermittent additional weight (6) which is disposed at an intermediary height and which, once a certain quantity of liquid has been emptied, is no longer suspended as the water level falls, said action, together with the weight of the assembly and the additional weight (6), causing the discharge valve (4) to close with the remaining water being left in the cistern. Moreover, when the above-mentioned button is pressed a second time, the overflow pipe (3) remains elevated and the outlet valve (4) stays open, such that the cistern can be fully emptied since the additional weight (6) has been eliminated

## Description

### OBJECT OF THE INVENTION

The present invention relates to a dual flushing quantified water-saving mechanism in toilets controlled by a single push-button.

This invention is applicable within the sector of water-saving systems in toilet tanks and deposits, and within these among the purely mechanical devices which make use of elements already known in order to act on the water shut-off valve. It aims to have two quantities of water, one less than the other, both being perfectly dosed and measured so that in a voluntary manner, depending on the specific use, either the entire quantity of liquid or only the smaller volume is emptied.

### BACKGROUND OF THE INVENTION

In the current state of the art, there are various water-saving mechanisms for toilet tanks. Especially well-known are those devices having two separate floats or a double water tank which are actuated by means of a double push-button or handle such that the emptied volumes of water are different depending on the float or tank used, according to which handle or push-button has been pressed.

Devices are also used which have a valve-regulation mechanism according to the force used when pressing, or there are those which have various valve opening diameters and regulation diameters for the outgoing liquid flow, or with a double water storage system which, when the push-button is acted on, causes two steps in which once a certain point is passed the mechanical elements are pulled, giving rise to the complete flush.

Furthermore, different types of floats, adaptors, electrical or electronic systems are known, the systems varying in their complexity, or there are other mechanisms regulating the flow of water into tanks.

One of the problems all these known devices have in common is the difficulty of adapting to the different types of toilets already available, meaning that in most cases the toilet itself must already have the mechanism built in. Therefore this involves greater costs throughout the whole manufacturing process, and furthermore, such systems lack versatility.

In addition, other mechanisms do not have any structural consistency, so even if they do adapt to existing toilets, within a short time they deteriorate. Moreover, many of these do not adjust or fix the cover of the tank.

Another of the disadvantages of the known systems is that, even though a significant water-saving occurs when using them, said saving cannot normally be quantified. One example is those systems in which the water outlet valve opens by pressing or pulling, ,and the water flows towards the outlet in a constant form while the push-button or handle is being acted upon, or on the contrary it is necessary to press a further time to detain the flow. Water is saved, yet it cannot be known conclusively how much, as this will depend on the time of action in each case.

Perhaps the greatest drawback however, with the existing systems is that to save water, it is necessary to carry out an action intended to save water:
- In single push-button mechanisms in which one press actuates the emptying of water and a second press stops said emptying, the water-saving depends on pressing the push-button a second time, and in addition, this is not quantifiable, since the quantity of emptied water is dependent on the time elapsed between the first and second press, and this will be different each time
- In single push-button mechanisms which have two positions or a double pressing range, the force or intensity used must be chosen when actuating the push-button to save water, or to avoid going over a certain range when pressing the push-button, without being able to assure that with an action of pressing and releasing the push-button, the force, intensity or range is the correct one to save water.
- As regards split or double push-button mechanisms, it is necessary to choose which part of the push-button or which of the two must be actuated, the water-saving occurring if the push-button is pressed correctly or with the appropriate part of the same.

As a result, the water-saving depends on the willingness of the user and is open to carelessness, neglect, forgetfulness, lack of knowledge or comfort which all have an influence on whether the second press of the push-button is carried out or whether the saving mechanism is actuated correctly.

There are even dual flushing mechanisms with a single push-button in which the first pressing causes a partial flush which is independent of the rush of water or the pressure with which the water is discharged and thus leads to an obliged and quantifiable water-saving, but it is necessary to press a second time and this must be continuous or maintained for a sufficient period of time to cause the complete emptying of the tank, a light instantaneous pressing will not be sufficient for the complete emptying. Within these systems, there are complex mechanisms which are based on a double pivoting lever device in which the first press actuates the upper lever and pivots the lower lever maintaining the sealing plug open until the float lowers and the emptying plug closes producing the deactivation or disassembly of the two levers, thus with the second press as neither said levers nor the float intervene, a flush occurs on demand while the push-button is being pressed in a continuous form. The two levers are prepared to act once again after the water refill, in such way as to restart the process.

There are also systems with a single push-button in which, it is not necessary to maintain the push-button pressed for a long time to cause the second flush for the complete emptying, but its operation depends on a system of floats which must work in an alternate and coordinated manner for the complete or partial emptying of the tank.

In addition, there are mechanisms with a single push-button with a pipe having an intermediate float and an upper ballast called "ballast siphon" which is a siphon consisting of a suction bell formed by several pieces: an inner piece surrounding the pipe, an outer piece going around the inner piece and forming with the latter the ballast liquid container; and a cover sealing the inner piece above the suction opening, surrounding the suction opening of the vertical pipe like a bell so as to assure action of the siphon. The first presses of the user have the sole objective of achieving a suction by means of the siphon effect which the bell causes on the liquid contained in the tank for its emptying through the inner part of the pipe, for which reason the amount of this partial quantity depends on the time that the user actually actuates the pull rod or the pressure pipe; when the user maintains the pressure lever continuously actuated, the "large" flush occurs as, in the other case, the weight of the ballast would cause a lowering of the pipe and the closure of the bottom valve, with the purpose of producing the above-described suction explained by means of the siphon effect of the bell or ballast siphon.

The proposed invention does not include any type of siphon and a single short press is sufficient to achieve the partial emptying of the tank through the lower general outlet valve and not through the overflow pipe by means of suction through a bell; the water emptied in the first flush is always the same, a quantifiable part of the capacity of the deposit or tank and does not depend on the duration of the press. The main difference lies in that with the present invention it is not necessary to know before-hand how the device works, it is sufficient to check that on pressing once it partially flushes, and with a second press the rest of the water contained in the tank exits, and in no case is it necessary to actuate it several times to create the siphon effect until obtaining the partial emptying and subsequently being able to obtain the complete flush.

The invention object of the present patent manages to avoid the previously mentioned drawbacks in a simple manner by means of a single water outlet valve, a single push-button and a single float, producing the partial or complete flush depending on the variability of the forces acting on the closure of the liquid outlet valve. With a device which is structurally robust and adaptable to any type of toilet tank, an already measured and established volume is flushed simply with the action of pressing or pulling a single time, while the complete flush occurs when the push-button or handle is actuated for a second time in the time interval elapsing between the partial flush and the refilling of the tank. The system uses the coupling of simple mechanical devices which on the one hand physically separate the opening and closure of the water outlet valve to the toilet, and on the other the refilling of water in the system.

### EXPLANATION OF THE INVENTION

The actuation of an additional variable weight is essential for the operation of the invention, such weight disappearing once the first partial flush occurs, therefore when pressing a second time, as this extra weight does not exist, the flush continues to the end. Said extra weight reappears when the tank is filled again, so the cycle of flushes can be repeated.

The fact that some of the mechanisms used in the system are adjustable in addition to being adaptable to the tank allows the established volume of water flushed when pressing a single time to also be different according to the applications. Normally the whole of the tank includes a volume close to 10 liters of water. On pressing a single time, 4 liters will be flushed, and the other 6 liters are flushed only on pressing a second time, within the time period between the partial flush and the refilling of the tank, and without the need to maintain the push-button pressed for a prolonged time.

The system by which the filling occurs again through a water feed valve connected to the tank is independent of the operation indicated herein, though they do have to work in a synchronized manner as when a flush occurs, the start of the filling of the tank must also occur. Nevertheless, as both are independent it is possible to obtain a partial flush by pressing a single time and waiting the sufficient time until the refilling of the tank, in the event of requiring the same flush, it is possible to have as many partial flushes as desired. That is to say, it is not necessary after a partial flush to empty the whole of the tank.

The entire invention is characterized by its simplicity and versatility, features which are of priority in this sector of the art.

The dual flushing quantified water-saving mechanism in toilets controlled by a single push-button object of the invention is based on an obliged saving mechanism which could be referred to as involuntary and intuitive saving once actuated, whereby acting on a push-button or handle a single time the controlled flush of a previously established volume of water is obtained, it being necessary to press a second time during the filling of the tank and without the need to maintain the push-button pressed for the complete flush to occur.

The obliged saving due to the previously quantified partial occurs with the assistance of a float with an additional or extra weight acting on the overflow pipe. On activating the push-button, the overflow pipe and the water shut-off valve are raised, the net force of said float and extra weight acting on said pipe and valve. If there were no additional weight, the force of the float would keep the assembly raised until the complete flush. Therefore, at the start of the flush, with the tank filled, the float maintains the assembly of the pipe and the lower closure incorporated thereto raised a certain time, producing the partial flush, the outlet valve closing before the complete flush, given that said float physically loses its buoyancy due to the emptying of the water when the level of the flow is reduced when the discharge valve opens and due to the action of the extra weight forcing said valve to close before the complete flush.

On pressing and releasing a single time, this limited and quantified volume of water is immediately flushed, and if the pressing action is not prolonged and/or another pressing is not carried out, the refilling of this volume occurs by the normal systems and by means of another filling valve such that when the tank is refilled the extra weight reappears. Thus this partial flush process with a limited and quantified volume of water may be repeated as many times as desired simply by performing the action of a single press and waiting for the tank to fill.

In the event that in addition to the limited volume all the water accumulated in the tank is to be emptied, it is necessary to press a second time without the need to maintain the pressing action in the interval of time lapsing between the end of the partial flush and the refilling of the tank. As the additional weight acting against the buoyancy has disappeared and there being no further actions in the tank with regard to the pipe and the shut-off valve assembly except the upward force of the float, which without extra weight is able to maintain said assembly raised until the loss of buoyancy due solely to the lack of liquid, it is obtained that the water outlet valve is permanently open until the complete flush of the volume of the tank.

The mechanism as a whole has an adjustable handle or push-button housed in the threading of a rocker arm and hooked with a fork. All these elements acting in sequence are responsible for the opening of the discharge valve. The float and the variable extra weight are assembled on the overflow pipe having at its lower part the sealed water outlet, the float being housed on the lower part of said pipe, whilst the variable extra weight is located in the intermediate part at a height which is determined according to the volume of liquid to be emptied with the first flush.

Structurally, there is an anchoring bridge to fix the cover of the tank, which could have a variable height depending on the tank where it is housed. There is also a fixing mechanism of the anchoring bridge by means of flanges, assuring that once the height is fixed there will be no movement in the anchoring bridge, and it is possible to move said bridge simply by pressing said flanges on both sides of the mechanism. This constitutes in summary the system of installation or removal.

The whole assembly is housed in a casing installed in the tank. An ornamental cover is added to hold the system to the tank cover, push-button (which in its case and applying the same principles could also directly be a handle).

In the patent object of the invention water-saving must be considered statistically or in a quantified manner in the sense that once fixed, it is always the same without the possibility of varying the capacity.

### DESCRIPTION OF THE DRAWINGS

For a better understanding of that described in the present specification, several drawings are attached in which, by way of example, a practical embodiment of the mechanism and its operation is illustrated. In said drawings:

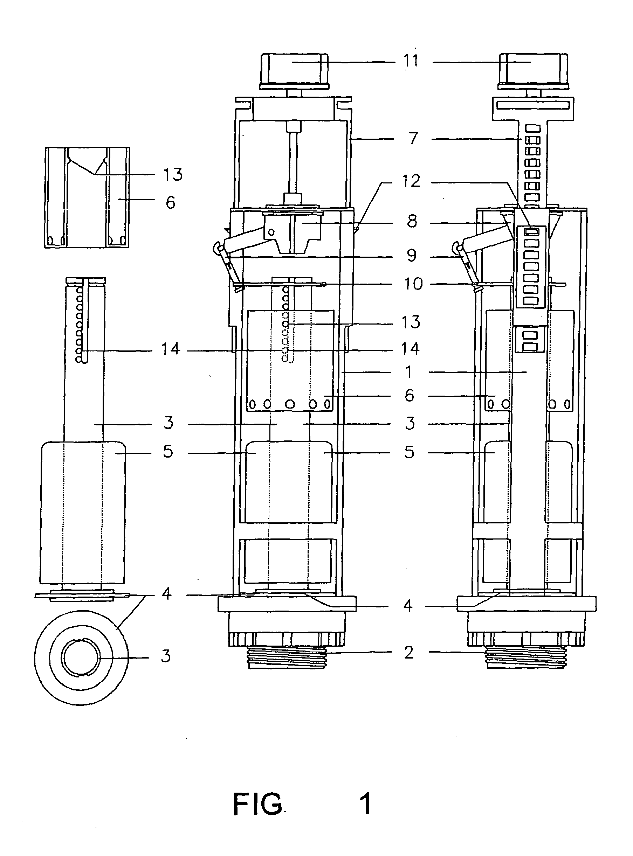

Figure 1 shows two elevational profile views of the complete assembly and also an elevational view of the anchoring system of the deposit-extra weight.

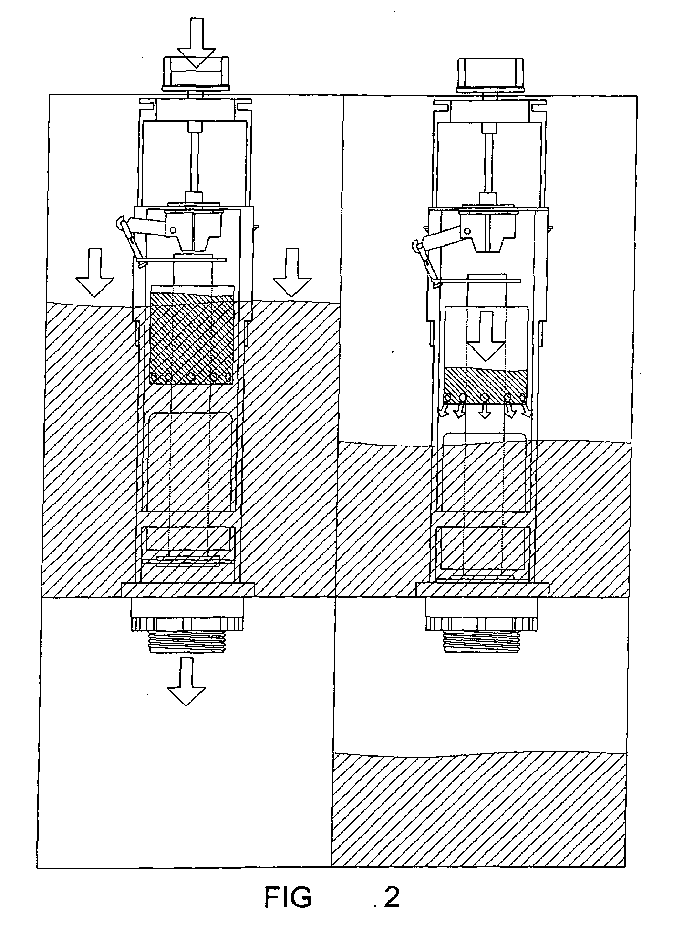

Figure 2 shows a view of the operation of the partial flush.

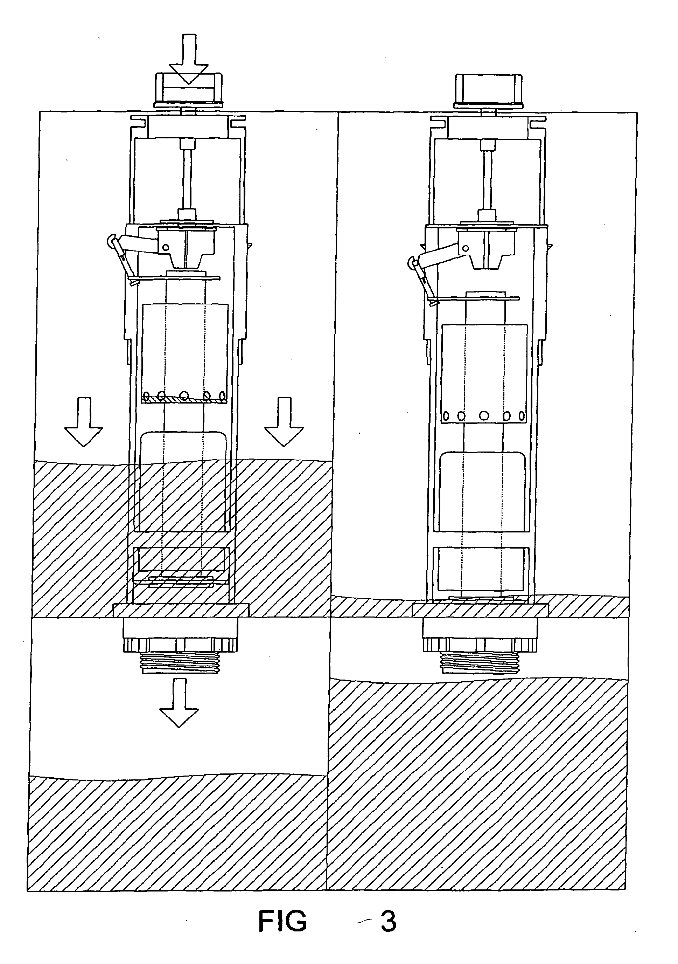

Figure 3 shows a view of the operation of the complete flush.
The numbered details correspond to:
   1) Mechanism casing
   2) Anchoring fitting
   3) Overflow pipe
   4) Rubber-coated sealing disc, discharge valve
   5) Float
   6) Variable extra weight
   7) Adjustable anchoring bridge
   8) Assembly threaded to rocker arm
   9) Adjustable handle
   10) Fork
   11) Push-button
   12) Fixing flanges
   13) Pivot for anchoring extra weight to pipe
   14) Notches in the pipe for anchoring extra weight

### DESCRIPTION OF A PREFERRED EMBODIMENT

A preferred embodiment shall be described for the quantified water-saving mechanism in toilets by instantaneous (not prolonged) dual flushing, controlled by a single push-button and a single float.

Starting from an outer casing (1) of the mechanism, made of a sufficiently resistant flexible material, housed therein there is an anchoring bridge (7) for holding the cover of the tank. This anchoring bridge is adjustable such that it can be raised or lowered gradually for its adaptation to a particular tank. Furthermore, the bridge (7) is fixed by means of flanges (12), so that there will be no movement thereof once the height is determined. The bridge (7) can be installed or removed by pressing on this system of flanges at both sides of the mechanism. The flanges are made from a material allowing certain flexibility.

An assembly threaded with a rocker arm (8) located symmetrically in the centre of the structure internally houses an adjustable handle (9) which moves a fork (10). As said handle is adjustable, it is intended so that the anchoring bridge for holding the cover of the tank is also adjustable. The actuation of the fork on an overflow pipe (3) will directly determine actuation on the on the water outlet valve. Thus, the overflow pipe (3), similar to those existing in any toilet, in turn incorporates in its lower part a sealing disc regulating the opening of the discharge valve (4).

The participation of a float (5) and an additional variable extra weight (6) are necessary for the operation of this invention.

The float (5) consists of a cylindrical bell with an axial opening according to the outer diameter of the pipe (3) and surrounding said pipe, it is fixed thereto in its lower part. It is sized such that when the extra weight (6) does not act, its buoyancy is able to maintain the pipe assembly raised with the liquid outlet valve open until the complete emptying of such liquid.

The variable extra weight (6) consists of a cylindrical vessel with an axial opening according to the outer diameter of the pipe (3) to which is coupled by pressure and is internally provided with a small projecting pivot (13) in correspondence with a series of vertically aligned notches (14) existing on the pipe (3) such that once the extra weight (6) is introduced and positioned at the required height, it is sufficient to turn it until making the pivot (13) coincide in one of said notches (14), which thus retains it in the desired position at a certain height according to the liquid which is to be emptied in the first partial flush. Said vessel is also perforated in its lower part by openings allowing the inlet and outlet of water inside it depending on the level of existing liquid, said openings are calibrated, sizing them so that the emptying and inlet of the water to inside the vessel occurs at a lower speed than the speed of emptying and refilling of the water of the tank through the outlet and general refilling valves, respectively.

By acting on a push-button (11) and consequently on the assembly associated thereto, which will end in the actuation of the fork (9) on the pipe (3), gives rise to a single actuation of the push-button moving said pipe upwards and consequently causing the opening of the shut-off valve (4). The upward force of the float (5) and the downward force of the extra weight (6) begin to act, the vessel, which full of liquid at this time, causes the mentioned extra weight reducing the buoyancy of the float (5) and the pipe assembly drops, achieving the partial flush by causing the early closure of the water outlet valve (4), while if the extra weight did not exist, said valve would remain open due to the action of the float (5) until the complete flush.

While the pipe assembly is raised opening the outlet valve and the partial flush occurs, the level of liquid in the tank has dropped and the extra weight gradually disappears as said level drops. The gradual disappearance of the extra weight is caused by the principle of communicating vessels on the deposit (6) being emptied through its lower openings in a manner which is slower than that of the outlet of the water from the tank through the general outlet valve. The fact that the emptying of the vessel (6) occurs at a lower speed than that of the emptying of the tank allows that there is still an extra weight in the vessel during the partial flush, causing the closure of the outlet valve (4). The emptying of a controlled volume is thus achieved, according to the height at which the extra weight vessel is adjusted; about two liters will have been flushed in the highest position and about five liters in the lowest position for a standard ten liter tank, and about eight or five liters, respectively, of water that have not been emptied remain if no force continues to be exerted on the push-button.

In the event that the push-button (11) is actuated again in the course of the refilling of the volume of emptied liquid and without the need to maintain the pressing, the complete flush of the tank will occur due to the fact that the filling of the extra weight vessel occurs at a lower speed than the general refilling as the level of liquid in the tank rises, when this second press occurs the vessel is virtually empty and as there is no considerable extra weight, the only force acting on the pipe assembly apart from its own weight is that of the float (5), which is sized so as to bear the raised assembly without an extra overload with the outlet valve open until the buoyancy is lost sue to a lack of the level of liquid, the complete emptying thus occurring.

The device of the present invention is not affected in its operation by the intensity, pressure or range of pressing carried out on a single push-button to cause the partial or complete flushing of water.

The mechanism for the filling subsequent to each emptying is carried out by means of a water inlet valve for letting water into the tank, which is independent from the emptying processes, such that partial or complete flushes can occur in any alternating or consecutive order.

The casing of the mechanism will be anchored in the tank by means of a fitting (2). The push-button (11) has an ornamental cover for anchoring the mechanism in the cover of the tank.

As has already been indicated, this mechanism is able to be applied industrially as one of the control systems of toilet tank water discharge valves.

## Claims

1. A dual flushing quantified water-saving device in toilets comprising a single push-button which actuates by moving, in the opening, an overflow pipe (3) upwards, provided on its lower part with a sealing disc providing the opening or closure of the discharge valve (4), **characterized in that** said pipe (3) is provided with a float (5) which is able to maintain the device open until the complete flush if there are no further forces acting on the overflow pipe assembly except its own weight, and an intermittent extra weight (6) arranged at an intermediate height which, once a certain quantity of liquid is emptied, physically loses the suspension by the emptying of the water when the level decreases, which together with the weight of the assembly with the extra weight (6) gives rise to the closure of the water outlet valve (4) leaving the rest of the volume of water in the tank; whereas on performing a second pressing, said pipe (3) is maintained raised and the outlet valve open (4), causing the complete emptying of the total volume of water contained in the tank as the excess weight (6)has disappeared.

2. A device according to claim 1, **characterized in that** said extra weight (6) is constituted of a liquid housed inside a cylindrical body, with an axial opening according to the outer diameter of the pipe (3) wherein it is coupled by pressure, having openings on its lower part allowing the outlet and inlet of water to the inside at a lower speed than that of the flow of water through the general outlet and inlet valves of the tank, such that when a certain quantity of water has been discharged from the tank, the cylindrical body has not yet emptied there being an excess weight inside it causing the closure of the outlet valve of the tank; whereas when it is pressed again, the cylindrical body is empty as there is no excess weight inside and then allows the complete flush due to the action of the float (5).

3. A device according to claims 1 and 2, **characterized in that** said extra weight (6) has a means of coupling on the pipe (3) which allows adjusting its height location, thus determining the volume of water that is emptied upon the first pressing.

4. A device according to claims 1 to 3, **characterized in that** said extra weight (6) consists of a cylindrical body with an axial opening according to the outer diameter of the pipe (3) provided with a small projecting pivot in correspondence with a series of vertically aligned notches existing on the pipe, such that once the float is introduced and positioned at the required height, it is sufficient to turn it until making the pivot coincide in one of said notches, which thus retains it in the desired position.

5. An operating method of the device of claims 1 to 4, comprising the following steps:
a) Performing a first instantaneous pressing to cause a partial flushing of the pre-established quantity of water.
b) Performing a second instantaneous pressing during the course of refilling of the liquid emptied in the first flush to cause the complete flushing of the tank.
